Europäisches Patentamt

European Patent Office

Office européen des brevets

(19)

(11) Veröffentlichungsnummer: **0 036 503**
**B1**

(12) # EUROPÄISCHE PATENTSCHRIFT

(45) Veröffentlichungstag der Patentschrift:
23.11.83

(51) Int. Cl.³: **H 02 H 7/122,** H 02 H 7/127

(21) Anmeldenummer: **81101393.7**

(22) Anmeldetag: **26.02.81**

(54) Einrichtung zum Schutz eines Stromrichters.

(30) Priorität: **18.03.80 DE 3010338**

(43) Veröffentlichungstag der Anmeldung:
**30.09.81 Patentblatt 81/39**

(45) Bekanntmachung des Hinweises auf die Patenterteilung:
**23.11.83 Patentblatt 83/47**

(84) Benannte Vertragsstaaten:
**AT BE CH FR GB IT LI NL SE**

(56) Entgegenhaltungen:
**DE - A - 2 732 157**
**DE - B - 2 637 868**

(73) Patentinhaber: **BROWN, BOVERI & CIE**
**Aktiengesellschaft Mannheim, Kallstadter Strasse 1,**
**D-6800 Mannheim Käfertal (DE)**

(72) Erfinder: **Moll, Klaus, Dipl.-Ing., Lorscher Ring 16c,**
**D-6710 Frankenthal (DE)**
Erfinder: **Schulze, Helmut, Dipl.-Ing., Heyerstrasse 7,**
**D-6105 Ober-Ramstadt (DE)**

(74) Vertreter: **Kempe, Wolfgang Dr. et al, c/o Brown, Boveri**
**& Cie AG Patentabteilung Postfach 351,**
**D-6800 Mannheim 1 (DE)**

ACTORUM AG

Einrichtung zum Schutz eines Stromrichters

Die Erfindung betrifft eine Einrichtung zum Schutz eines Stromrichters, der einen in einer Stromquelle erzeugten eingeprägten Gleichstrom in Wechselstrom umformt und einem Verbraucher zuführt, mit einem Steuersatz, in dem Zündimpulse für die steuerbaren Halbleiterelemente des Stromrichters gebildet werden, mit einem Sollsperrintervall-Geber, mit einem Istsperrintervall-Kontroller und mit einem Vergleicher, der die Soll- und Istsperrintervalle der steuerbaren Halbleiterelemente miteinander vergleicht.

Eine derartige Schutzeinrichtung für eine lastgeführte Thyristorwechselrichterschaltung ist aus der DE-AS Nr. 2609578 bekannt. Die bekannte Anordnung enthält einen Torimpulsoszillator, der in regelmässiger Folge Zündimpulse für den Wechselrichterthyristor erzeugt. Sie enthält ferner eine Spannungsdetektorschaltung, die die am Thyristor anliegende Sperrspannung daraufhin überwacht, ob nicht der maximal zulässige Sperrspannungspegel überschritten wird. Bezugsleitperiodengeber ist ein monostabiler Multivibrator, der bei Beginn der Zündimpulse getriggert wird. Ein Leitperiodenkomparator vergleicht die Spannung am Wechselrichterthyristor mit dem Ausgangssignal des monostabilen Multivibrators. Überschreitet die Leitperiode des Thyristors beispielsweise infolge eines Kommutierungsfehlers die Impulsdauer des monostabilen Multivibrators, so wird eine Selbsthalteschaltung aktiviert, die die Bildung der Zündimpulse unterdrückt. Sollte bei gesperrtem Thyristor die maximal zulässige Sperrspannung überschritten werden, so sorgt die Spannungsdetektorschaltung dafür, dass der Thyristor in den leitenden Zustand geschaltet wird und dass gleichzeitig ein vorgeschalteter Schutzschalter geöffnet wird.

Aus der DE-OS Nr. 2323826 ist eine Steuereinrichtung für eine ein- oder mehrphasige, aus einem oder mehreren selbstgeführten, taktverhältnisgesteuerten Wechselrichtern bestehende Wechselrichteranordnung bekannt, die einen Oszillator mit nachgeschalteter Zählerstufe sowie einen vorprogrammierten, digitalen Speicher enthält, dem auf die Periode der Grundschwingung am Wechselrichterausgang bezogene Zünd- und Löschzeitpunkte der Wechselanordnung für vorgebbare, definierte Betriebszustände in Abhängigkeit vom Eintreten eines solchen Betriebszustandes entnehmbar und in zeitabhängige Steuersignale zur Beeinflussung der Wechselrichteranordnung umwandelbar sind. In dieser bekannten Steuereinrichtung wird mit Hilfe des Oszillators jede Periode der Ausgangswechselspannung eine grosse Zahl von Zeitintervallen zerlegt. Stimmt die Nummer des momentanen Zeitintervalls mit der Nummer eines im Speicher abgelegten Zeitintervalls überein, so wird ein Zündimpuls für einen vorbestimmten Thyristor gebildet.

Aus der DE-OS Nr. 2756952 ist ein weiterer Steuersatz für einen mehrphasigen, selbstgeführten Stromrichter mit eingeprägtem Strom bekannt, der im wesentlichen aus einem Zähler mit acht Adressenausgängen, einer Rücksetzeinrichtung, einem Speicher, einer Dekodierungsschaltung, einem digitalen Komparator, mindestens vier zu einer Einheit zusammengefassten analogen Komparatoren, einem Frequenzspannungsumsetzer, sechs Verknüpfungsgattern sowie sechs Zündimpulsstufen aufgebaut ist. An die Eingänge des Zählers und des Frequenzspannungsumsetzers wird dabei eine Impulsfolge geleitet, deren Frequenz einem ganzzahligen Vielfachen der Ausgangsfrequenz des Stromrichters entspricht. Die Ausgänge des Zählers bilden die Adressen des Speichers. Sobald unter einer momentan anliegenden Adresse im Speicher eine Information abgespeichert ist, wird diese ausgelesen. Die abgespeicherte Information bezeichnet den gerade anzusteuernden Thyristor nach Massgabe eines der im Speicher abgelegten Taktverfahren für den Wechselrichter und enthält eventuell sonstige Signale für den Betrieb des Wechselrichters. Gleichzeitig wird in dem Frequenzspannungsumsetzer aus der anliegenden Impulsfolge eine analoge Spannung gebildet. Die dem Umsetzer nachgeordneten vier analogen Komparatoren bilden daraus ein der Spannungshöhe entsprechendes Binärwort. Dieses Binärwort wird mit den vier von der Dekodierungsschaltung kommenden Signalen verglichen. Bei Übereinstimmung wird ein Freigabesignal erzeugt, das die Weiterleitung des Zündimpulses für das entsprechende Taktverfahren an den betreffenden Thyristor bewirkt.

Im praktischen Betrieb von Stromrichtern sind Störungen möglich, die zwar nicht sofort zum Ansprechen der dem Stromrichter vorgeschalteten Sicherungen führen, die jedoch trotzdem einen Defekt einzelner Halbleiterbauelemente nach sich ziehen, was dann erst zum Ansprechen der Sicherung führt. Störungen dieser Art sind beispielsweise Kommutierungsfehler oder das Ansprechen der zum Schutz der Thyristoren gegen Überspannung zwischen Steuerelektrode und Anode angeschlossenen Notzündeinrichtungen. Ein derartiges Durchzünden einiger Thyristoren stoppt den Betrieb des Umrichters nicht. Es kann jedoch insbesondere dann, wenn die Störung periodisch auftritt, zu einer thermischen Überlastung der Halbleiterbauelemente und zu deren Zerstörung führen.

Der vorliegenden Erfindung liegt die Aufgabe zugrunde, eine Schutzeinrichtung anzugeben, die derartige Störungen erfasst und auswertet und die insbesondere für selbstgeführte Stromrichter mit in weiten Grenzen einstellbarer Ausgangsfrequenz und mit einer Vielzahl von Halbleiterbauelementen geeignet ist.

Diese Aufgabe wird dadurch gelöst, dass die Sollsperrintervalle in einem Festwertspeicher gespeichert sind, dass ein Ereigniszähler vorgesehen ist, der die durch den Vergleich der Soll- und Istsperrintervalle erkannten Störungen zählt, dass ein Speicherglied vorgesehen ist, das zur Abgabe eines Alarm- oder Abschaltsignales gesetzt wird, wenn der Ereigniszähler einen vorgegebenen Zählerstand erreicht hat, und dass eine Zeitbasiseinrichtung vorgesehen ist, die den Ereigniszähler immer dann zurückstellt, wenn am Ende einer vorgewählten Basiszeit das Speicherglied nicht gesetzt ist.

Gemäss einer bevorzugten Weiterbildung ist im Vergleicher eine der Zahl der steuerbaren Halbleiterelemente des Stromrichters entsprechende Zahl von UND-Gattern vorgesehen, an deren Eingängen die den Soll- bzw. Istsperrintervallen entsprechenden Impulse anliegen. Die Information bezüglich der Sollsperrintervalle der einzelnen Thyristoren werden vom Steuersatz des Wechselrichters zur Verfügung gestellt, wo sie vorzugsweise in demselben Speicher abgelegt sind, in dem auch die Informationen über die Zündzeitpunkte liegen.

Die Istsperrintervalle der einzelnen Thyristoren werden entsprechend der besonderen Thyristorspannungsform des Wechselrichters mit eingeprägtem Strom über eine Spannungsauswertung ermittelt. Hierzu enthält der Istsperrintervall-Kontroller vorzugsweise eine Auswerteschaltung mit Komparatoren und eine Potentialtrennstufe mit Optokopplern. Die Hysterese der Komparatoren liegt vorzugsweise symmetrisch zur Nullinie der Spannung an den Thyristoren.

Gemäss einer Weiterbildung sind die Ausgänge der UND-Gatter über ein ODER-Gatter auf den Takteingang des Ereigniszählers geführt. Dadurch werden alle Störungen unabhängig davon, an welchem Halbleiterbauelement sie auftreten, erfasst und aufsummiert.

Vorzugsweise ist der Ereigniszähler ein 1-aus-n-Zähler und ist zwischen Ereigniszähler und Speicherglied eine erste Wähleinrichtung zur Wahl des vorgegebenen Zählerstandes angeordnet. Mit Hilfe des Zählers und der Wähleinrichtung ist es in einfacher Weise möglich, ein Alarm- oder Abschaltsignal erst dann zu erzeugen, wenn eine vorgewählte Zahl von Störungen, die die Gefahr einer thermischen Überlastung einzelner Halbleiterelemente mit sich bringt, erreicht ist.

Vorteilhafterweise ist das Speicherglied ein RS-Flipflop, das über seinen S-Eingang gesetzt wird, sobald der durch die Wähleinrichtung eingestellte Ausgang des Ereigniszählers aktiviert ist, und das über seinen R-Eingang zurückgesetzt wird, sobald dort ein externes Rücksetzsignal erzeugt wird.

Gemäss einer bevorzugten Ausbildung besteht das Zeitbasisglied aus einem Binärzähler, dessen Takteingang regelmässige Taktimpulse zugeführt werden, einer dem Zähler nachgeordneten zweiten Wähleinrichtung zur Vorwahl der Basiszeit und einem Zeitglied, welches einen Rücksetzimpuls definierter Länge an die Rücksetzeingänge des Ereigniszählers und des Basiszählers liefert. Die Bildung der Zeitbasis aus einer einstellbaren Zahl von Taktimpulsen ermöglicht eine einfache Anpassung der Zeitbasis an den jeweils zu schützenden Wechselrichter.

Vorzugsweise ist das Zeitglied ein Monoflop, das den am Ausgang des Zeitbasiszählers anstehenden Impuls von nicht definierter Länge in einen Rücksetzimpuls genau definierter Länge umwandelt.

Zur Sperrung des Rücksetzimpulses für den Ereigniszähler ist ein UND-Gatter vorgesehen, dessen einer Eingang mit dem Ausgang des Zeitgliedes und dessen anderer Eingang als Sperreingang mit dem Ausgang des Speichergliedes verbunden ist, während der Ausgang des UND-Gatters mit dem Rücksetzeingang des Ereigniszählers verbunden sind. Dieses UND-Gatter sperrt die Weiterleitung der Rücksetzimpulse nur dann, wenn während der vorgewählten Basiszeit die zulässige Anzahl von Störungen überschritten wurde.

Vorteilhafterweise enthält der Vergleicher zusätzlich eine Diagnoseeinrichtung, die aus einer der Zahl der steuerbaren Halbleiterelemente entsprechenden Zahl von Speichergliedern besteht, deren Setzeingänge mit den Ausgängen der die Sperrintervalle vergleichenden UND-Gatter und deren Rücksetzeingänge mit dem Ausgang des den Rücksetzimpuls abgebenden UND-Gatters verbunden sind, und es sind mit den Ausgängen der Speicherglieder Anzeigeelemente verbunden. Diese einfache Diagnoseeinrichtung zeigt durch das Aufleuchten eines Anzeigeelementes genau an, an welchem der Halbleiterelemente eine Störung aufgetreten war. Solange die während der Basiszeit auftretenden Störungen nicht die maximal zulässige Anzahl überschreiten, wird die Diagnoseeinrichtung zusammen mit dem Ereigniszähler zurückgesetzt.

Anhand der Zeichnung soll die Erfindung in Form eines Ausführungsbeispiels näher erläutert werden. Es zeigen:

Fig. 1 einen Drehstrom-Wechselrichter mit Phasenfolgelöschung mit der erfindungsgemässen Einrichtung in Form eines Blockschaltbildes,

Fig. 2 die Verläufe von Thyristorstrom, Thyristorspannung, Bezugsleitperioden und Istleitperioden in Abhängigkeit von der Zeit, und

Fig. 3 eine Schaltung der Vergleichereinrichtung mit zusätzlicher Diagnoseeinrichtung.

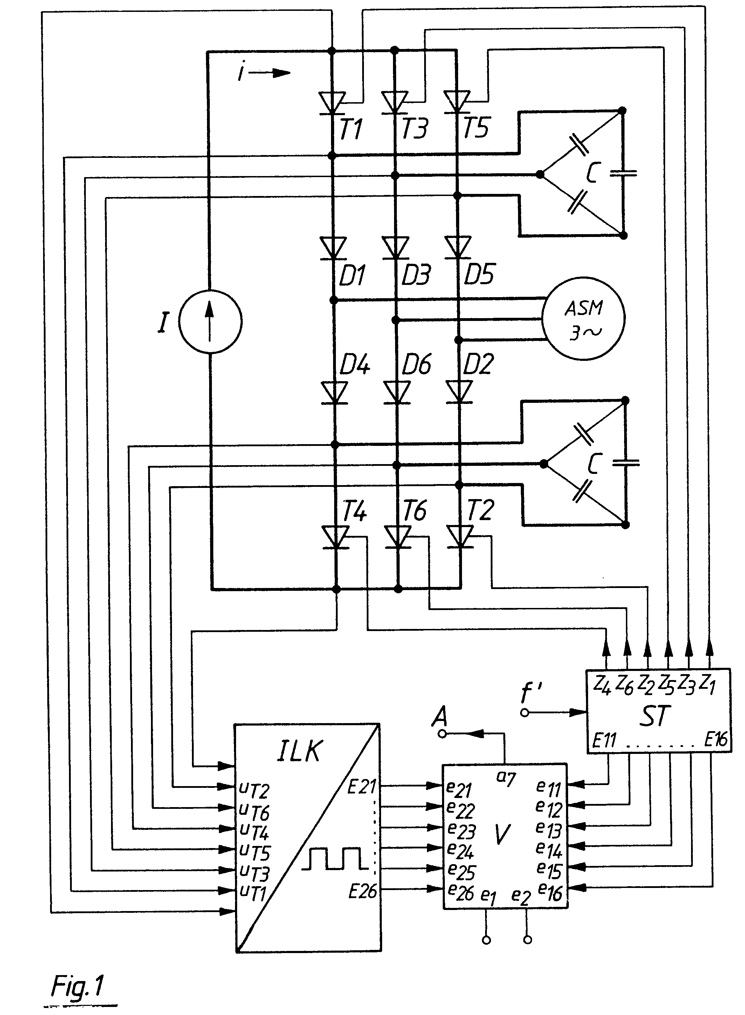

In Fig. 1 erkennt man einen Drehstrom-Wechselrichter mit Phasenfolgelöschung, bestehend aus sechs Thyristoren T1 ... T6, sechs Dioden D1 ... D6 und sechs Kommutierungskondensatoren C, der eine dreiphasige Asynchronmaschine ASM als Verbraucher speist. Der Wechselrichter selbst wird aus einer Gleichstromquelle I mit eingeprägtem Gleichstrom i gespeist. Die Zündimpulse $Z_1$ ... $Z_6$ für die Thyristoren T1 ... T6 werden in einem Steuersatz ST gebildet, dem ein Signal f' für die Frequenz der Wechselrichterausgangsspannung zugeführt wird. Der Aufbau eines derartigen Drehstrom-Wechselrichters mit Phasenfolgelöschung ist beispielsweise bekannt aus der DE-Zeitschrift „ETZ-A", Bd. 96 (1975), Heft 11, S. 520. Der Aufbau eines Steuersatzes, der zum Einsatz bei der vorliegenden Erfindung geeignet ist, ist beispielsweise bekannt aus der DE-OS Nr. 2756952.

Der Steuersatz ST gibt ausser den Zündimpulsen $Z_1$ ... $Z_6$ auch noch Impulse E11 ... E16 ab, die den Sollsperrintervallen der Thyristoren T1 ... T6 entsprechen. Diese Impulse E11 ... E16 gelangen an Eingänge e11 ... e16 eines Vergleichers V.

Die Spannungen $U_{T1}$ ... $U_{T6}$ an den Thyristoren T1 ... T6 liegen am Eingang des Istsperrintervall-Kontrollers ILK an. Dort werden sie über eine Potentialtrennstufe mit Optokopplern auf Elektronikpotential gebracht. Mit Hilfe von Komparatoren, deren Hysterese vorzugsweise symmetrisch zur Nullinie der Spannung liegt, werden daraus Rechteckimpulse geformt, die den Istsperrintervallen E2 der Thyristoren T1 ... T6 entsprechen. Die einzelnen Impulsreihe E21 ... E26 liegen an den Eingängen e21 ... e26 des Vergleichers V an. Im Falle einer Störung erscheint am Ausgang a7 des Vergleichers V ein Alarm- oder Abschaltsignal A.

Dem Vergleicher V werden ausserdem am Eingang e1 ein externes Rücksetzsignal und am Eingang e2 Taktimpulse für ein Zeitbasisglied zugeführt.

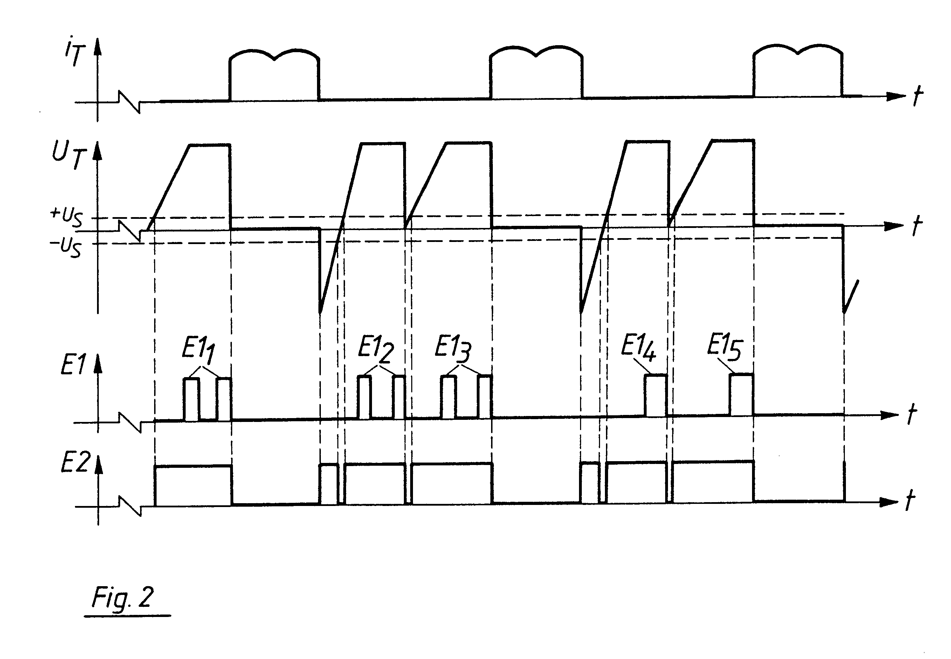

In Fig. 2 erkennt man den typischen Verlauf des Stromes $i_T$ durch einen der Thyristoren des phasenfolgegesteuerten Wechselrichters mit eingeprägtem Strom. Man erkennt weiterhin den typischen Verlauf der Spannung $U_T$ an diesem Thyristor. Man erkennt, dass während der Stromleitung die Spannung am Thyristor Null oder beinahe Null ist. Eingezeichnet ist auch die positive und negative Schwellenspannung $U_S$ der im Istsperrintervall-Kontroller ILK eingesetzten Komparatoren.

Die Impulsreihe $E1_1$ ... $E1_6$ gibt die Sollsperrintervalle an; immer wenn das Sollsperrintervall E1 von Null verschieden ist, muss auch das Istsperrintervall E2, das darunter eingezeichnet ist, von Null verschieden sein. Die Istsperrintervall-Impulsreihe E2 ist immer dann von Null verschieden, wenn die Thyristorspannung $U_T$ höher ist als die Schwellenspannung $U_S$.

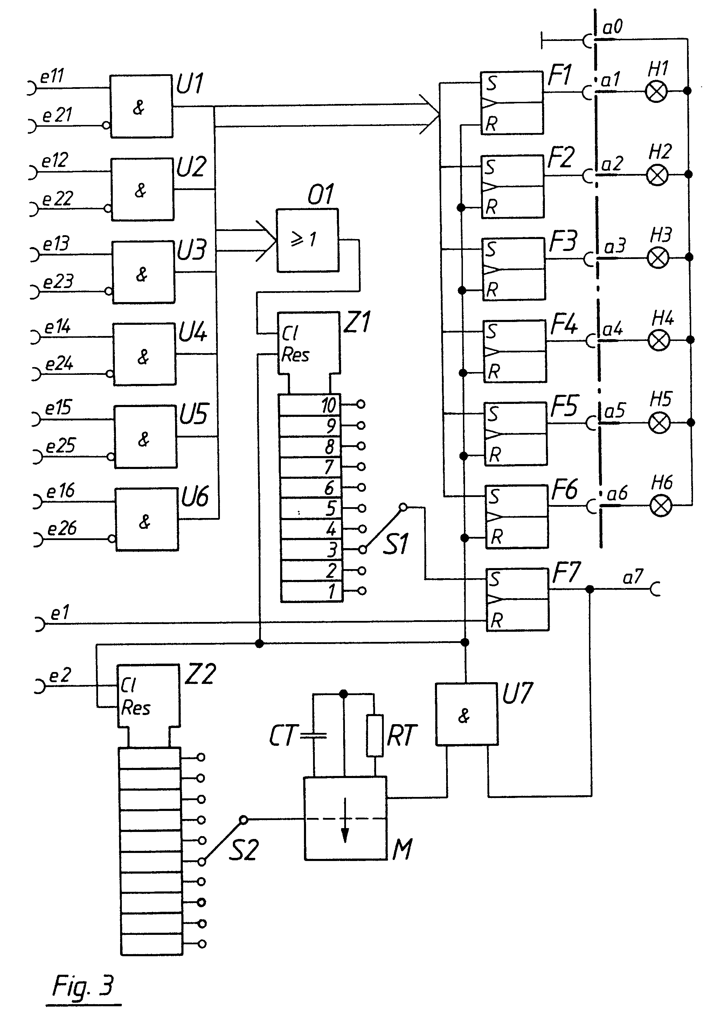

Fig. 3 zeigt einen Aufbau des Vergleichers V der Fig. 1. Man erkennt die sechs Eingänge e11 ... e16 und e21 ... e26, die auf je ein UND-Gatter U1 ... U6 geführt sind. Alle Ausgänge der UND-Gatter U1 ... U6 sind über ein ODER-Gatter O1 auf den Takteingang C1 eines Ereigniszählers Z1 geführt. Der Ereigniszähler Z1 ist als 1-aus-10-Zähler ausgebildet. Seine zehn Ausgänge sind über eine erste Wähleinrichtung S1 mit dem Setzeingang S eines als Speicher dienenden RS-Flipflops F7 verbunden. Sobald im Ereigniszähler Z1 die eingestellte Zahl von Störungen aufsummiert ist, erscheint am Ausgang a7 des Vergleichers V das Alarmsignal A.

Die am Eingang e2 anliegenden Zeittakte werden dem Takteingang C1 eines als Binärzähler ausgebildeten Zeitbasiszählers Z2 zugeführt. Die Ausgangssignale des Zeitbasiszählers Z2 sind über eine zweite Wähleinrichtung S2 mit einem Zeitglied M verbunden. Das Zeitglied M ist ein Monoflop, dessen Ausgangsimpuls über einen Widerstand RT und einen Kondensator CT fest eingestellt ist. Der Ausgang des Zeitgliedes M ist auf einen Eingang eines UND-Gatters U7 geführt, an dessen zweitem Eingang, der als Sperreingang ausgebildet ist, der Ausgang des Flipflops F7 anliegt. Solange am Ausgang des Flipflops F7 kein Alarm- oder Abschaltsignal A anliegt, werden die Rücksetzimpulse vom Zeitglied M über das UND-Gatter U7 an den Rücksetzeingang Res des Ereigniszählers Z1 sowie an den Rücksetzeingang Res des Zeitbasiszählers Z2 geleitet. Dadurch werden beide Zähler auf Null zurückgesetzt und der beschriebene Vorgang beginnt von neuem.

In Fig. 3 erkennt man ferner eine Diagnoseeinrichtung, die aus sechs RS-Flipflops F1 ... F6 besteht, deren Setzeingänge S mit je einem Ausgang der die Soll- und Istsperrintervalle vergleichenden UND-Gatter U1 ... U6 verbunden sind. Die Rücksetzeingänge R aller Flipflops F1 ... F6 sind gemeinsam mit dem Ausgang des UND-Gatters U7 verbunden. An die Ausgänge a1 ... a6 aller Flipflops F1 ... F6 sind Anzeigeleuchten H1 ... H6 geschaltet, deren zweiter Anschluss über eine gemeinsame Leitung am Anschluss a0 mit Masse verbunden ist. Sobald an einen der die Impulse vergleichenden UND-Gatter U1 ... U6 ein eine Störung anzeigendes Signal erscheint, wird das zugehörige Flipflop F1 ... F6 gesetzt und die entsprechende Anzeigelampe H1 ... H6 leuchtet auf. Sollte innerhalb der Basiszeit die maximal zulässige Zahl von Störungen nicht überschritten werden, so werden alle Flipflops F1 ... F6 gemeinsam zurückgesetzt und die Anzeigelampen gelöscht.

## Patentansprüche

1. Einrichtung zum Schutz eines Stromrichters, der einen in einer Stromquelle (I) erzeugten, eingeprägten Gleichstrom (i) in Wechselstrom umformt und einem Verbraucher (ASM) zuführt, mit einem Steuersatz (ST), in dem Zündimpulse ($Z_1$ ... $Z_6$) für die steuerbaren Halbleiterelemente (T1 ... T6) des Stromrichters gebildet werden, mit einem Sollsperrintervall-Geber, mit einem Istsperrintervall-Kontroller (ILK) und mit einem Vergleicher (V), der die Soll- und Istsperrintervalle (E1, E2) der steuerbaren Halbleiterelemente (T1 ... T6) miteinander vergleicht, dadurch gekennzeichnet, dass die Sollsperrintervalle (E1) in einem Festwertspeicher gespeichert sind, dass ein Ereigniszähler (Z1) vorgesehen ist, der die durch den Vergleich der Soll- und Istsperrintervalle (E1, E2) erkannten Störungen zählt, dass ein Speicherglied (F7) vorgesehen ist, das zur Abgabe eines Alarm- oder Abschaltsignales gesetzt wird, wenn der Ereigniszähler (Z1) einen vorgegebenen Zählerstand erreicht hat, und dass eine Zeitbasiseinrichtung (Z2, S2, M) vorgesehen ist, die den Ereigniszähler (Z1) immer dann zurückstellt, wenn am Ende einer vorgewählten Basiszeit das Speicherglied (F7) nicht gesetzt ist.

2. Einrichtung nach Anspruch 1, dadurch gekennzeichnet, dass der Istsperrintervall-Kontroller (ILK) eine Potentialtrennstufe mit Optokopplern und eine Auswerteschaltung mit Komparatoren enthält.

3. Einrichtung nach einem der beiden Ansprüche 1 oder 2, dadurch gekennzeichnet, dass im Vergleicher (V) eine der Zahl der steuerbaren Halbleiterelemente (T1 ... T6) des Stromrichters entsprechende Zahl von UND-Gattern (U1 ... U6) vorgesehen ist, an deren Eingängen (e11, e21; e12, e22; ... e16, e26) die den Soll- bzw. Istsperrintervallen entsprechenden Impulse (E1, E2) anliegen.

4. Einrichtung nach Anspruch 3, dadurch gekennzeichnet, dass die Ausgänge der UND-Gatter (U1 ... U6) über ein ODER-Gatter (O1) auf den Takteingang (C1) des Ereigniszählers (Z1) geführt sind.

5. Einrichtung nach wenigstens einem der Ansprüche 1 bis 4, dadurch gekennzeichnet, dass der Ereigniszähler (Z1) ein 1-aus-n-Zähler ist und dass zwischen Ereigniszähler (Z1) und Speicherglied (F7) eine erste Wähleinrichtung (S1) zur Wahl des vorgegebenen Zählerstandes angeordnet ist.

6. Einrichtung nach wenigstens einem der Ansprüche 1 bis 5, dadurch gekennzeichnet, dass das Speicherglied (F7) ein RS-Flipflop ist.

7. Einrichtung nach wenigstens einem der Ansprüche 1 bis 6, dadurch gekennzeichnet, dass das Zeitbasisglied aus einem Basiszähler (Z2), dessen Takteingang (C1) regelmässige Taktimpulse zugeführt sind, einer dem Zähler (Z2) nachgeordneten zweiten Wähleinrichtung (S2) zur Vorwahl der Basiszeit und einem Zeitglied (M), welches einen Rücksetzimpuls definierter Länge an die Rücksetzeingänge (Res) des Ereigniszählers (Z1) und des Binärzählers (Z2) liefert, besteht.

8. Einrichtung nach Anspruch 7, dadurch gekennzeichnet, dass das Zeitglied (M) ein Monoflop ist.

9. Einrichtung nach wenigstens einem der Ansprüche 1 bis 8, dadurch gekennzeichnet, dass zur Sperrung des Rücksetzimpulses für den Ereigniszähler (Z1) ein UND-Gatter (U7) vorgesehen ist, dessen einer Eingang mit dem Ausgang des Zeitgliedes (M) und dessen anderer Eingang als Sperreingang mit dem Ausgang des Speichergliedes (F7) verbunden ist, während der Ausgang des UND-Gatters (U7) mit dem Rücksetzeingang (Res) des Ereigniszählers (Z1) verbunden sind.

10. Einrichtung nach wenigstens einem der Ansprüche 1 bis 9, dadurch gekennzeichnet, dass eine Diagnoseeinrichtung vorgesehen ist, die aus einer der Zahl der steuerbaren Halbleiterelemente (T1 ... T6) entsprechenden Zahl von Speichergliedern (F1 ... F6) besteht, deren Setzeingänge (S) mit den Ausgängen der die Sperrintervalle (E1, E2) vergleichenden UND-Gatter (U1 ... U6) und deren Rücksetzeingänge (R) mit dem Ausgang des den Rücksetzimpuls abgebenden UND-Gatters (U7) verbunden sind, und dass mit den Ausgängen der Speicherglieder (F1 ... F6) Anzeigeelemente (H1 ... H6) verbunden sind.

## Claims

1. Device for protecting a current converter which converts impressed direct current (i) produced in a current source (I) to alternating current and delivers it to a consuming device (ASM), with trigger equipment (ST) in which ignition pulses ($Z_1$ ... $Z_6$) for the controllable semi-conductor elements (T1 ... T6) of the current converter are formed, with a rated blocking interval transmitter, with an actual blocking interval controller (ILK) and with a comparator (V) which compares the rated and actual blocking intervals (E1, E2) of the controllable semi-conductor elements (T1 ... T6) with one another, characterized in that the rated blocking intervals (E1) are stored in a fixed value store; in that an event counter (Z1) is provided which counts the disturbances detected by the comparison of the rated and actual blocking intervals (E1, E2); in that a storage member (F7) is provided which is set to emit an alarm or cut-off signal when the event counter (Z1) has reached a predetermined counting state, and in that a time base device (Z2, S2, M) is provided which always resets the event counter (Z1) when the storage member (F7) is not set at the end of a predetermined base time.

2. Device as claimed in claim 1, characterized in that the actual blocking interval controller (ILK) contains a potential buffer stage with opto-couplers and an evaluation circuit with comparators.

3. Device as claimed in claim 1 or 2, characterized in that there is provided in the comparator (V) a number of AND gates (U1 ... U6) corresponding to the number of controllable semi-conductor elements (T1 ... T6) of the current converter, to the inputs (e11, e21; e12, e22; ... e16, e26) of which AND gates the pulses (E1, E2) corresponding to the rated and actual blocking intervals are applied.

4. Device as claimed in claim 3, characterized in that the outputs of the AND gates (U1 ... U6) are fed via an OR gate (O1) to the phase input (C1) of the event counter (Z1).

5. Device as claimed in at least one of claims 1 to 4, characterized in that the event counter (Z1) is a 1-of-n-counter and in that a first selection device (S1) for selecting the predetermined counting state is arranged between the event counter (Z1) and the storage member (F7).

6. Device as claimed in at least one of claims 1 to 5, characterized in that the storage member (F7) is an RS flipflop.

7. Device as claimed in at least one of claims 1 to 6, characterized in that the time base member consists of a base counter (Z2), to the timing input (C1) of which regular timing pulses are delivered, a second selection device (S2), which is arranged downstream of the counter (Z2) for preselecting the base time, and a time member (M) which supplies a return pulse of a defined length to the return inputs (Res) of the event counter (Z1) and the binary counter (Z2).

8. Device as claimed in claim 7, characterized in that the timing member (M) is a monostable flipflop.

9. Device as claimed in at least one of claims 1 to 8, characterized in that in order to block the return pulse for the event counter (Z1) and AND gate (U7) is provided, one input of which is connected to the output of the timing member (M) and the other input of which is connected, as a blocking input, to the output of the storage member (F7), whilst the output of the AND gate (U7) is connected to the return input (Res) of the event counter (Z1).

10. Device as claimed in at least one of claims 1 to 9, characterized in that a diagnostic device is provided which consists of a number of storage members (F1 ... F6) corresponding to the number of controllable semi-conductor elements (T1 ... T6), the setting inputs (S) of the storage members (F1 ... F6) being connected to the outputs of the AND gates (U1 ... U6) comparing the blocking intervals (E1, E2), and the return inputs (R) thereof being connected to the output of the AND gate (U7) emitting the return pulse, and in that display elements (H1 ... H6) are connected to the outputs of the storage members (F1 ... F6).

**Revendications**

1. Dispositif de protection d'un convertisseur de courant qui convertit en courant alternatif un courant continu (i) imprimé produit dans une source de courant (I) et le conduit à un consommateur (ASM), comportant un élément de commande (ST) dans lequel sont formées des impulsions d'allumage ($Z_1$ ... $Z_6$) pour les éléments semi-conducteurs commutables (T1 ... T6) du convertisseur de courant, un générateur d'intervalle de blocage nominal, un contrôleur d'intervalle réel (ILK) et un comparateur (V) qui compare l'un à l'autre les intervalles de blocage nominal et réel (E1, E2) des éléments commandables semi-conducteurs (T1 ... T6), caractérisé en ce que les intervalles de blocage nominal (E1) sont mémorisés dans une mémoire de valeurs fixes, en ce qu'on prévoit un compteur d'événements (Z1) qui compte les perturbations reconnues par la comparaison des intervalles de blocage nominal et réel (E1, E2), en ce qu'on prévoit un élément de mémorisation (F7) qui, pour donner un signal d'alarme ou de mise hors circuit, est activé lorsque le compteur d'événements (Z1) a atteint un état prédéterminé de comptage, et en ce qu'on prévoit un dispositif de base de temps (Z2, S2, M) qui remet dans sa condition initiale le compteur d'événements (Z1) à chaque fois que l'élément de mémorisation (F7) n'est pas réglé à la fin d'un temps de base présélectionné.

2. Dispositif selon la revendication 1, caractérisé en ce que le contrôleur d'intervalle de blocage réel (ILK) comporte un étage de séparation de potentiel avec des coupleurs optiques et un circuit d'évaluation avec des comparateurs.

3. Dispositif selon l'une des revendications 1 ou 2, caractérisé en ce qu'on prévoit dans le comparateur (V) un nombre de portes ET (U1 ... U6) correspondant au nombre des éléments commandables semi-conducteurs (T1 ... T6) du convertisseur de courant, et aux entrées (e11, e21; e12, e22; ... e16, e26) desquelles on applique des impulsions (E1, E2) correspondant aux intervalles de blocage nominal ou réel.

4. Dispositif selon la revendication 3, caractérisé en ce que les sorties des portes ET (U1 ... U6) sont appliquées par l'intermédiaire d'une porte OU (O1) à l'entrée de cadence (C1) du compteur d'événements (Z1).

5. Dispositif selon au moins l'une des revendications 1 à 4, caractérisé en ce que le compteur d'événements (Z1) est un compteur de la forme 1 de n, et en ce qu'on dispose, entre le compteur d'événements (Z1) et l'élément de mémorisation (F7), un premier dispositif de sélection (S1) pour choisir l'état de comptage prédéterminé.

6. Dispositif selon au moins l'une des revendications 1 à 5, caractérisé en ce que l'élément de mémorisation (F7) est une bascule RS.

7. Dispositif selon au moins l'une des revendications 1 à 6, caractérisé en ce que l'élément de base de temps est constitué par un compteur de base (Z2), dont l'entrée de cadence (C1) reçoit des impulsions régulières de cadence, par un second dispositif de sélection (S2), en aval du compteur (Z2), pour choisir préliminairement le temps de base, et par un élément temporel (M) qui délivre une impulsion de remise à l'état initial d'une longueur définie aux entrées de remise à l'état initial (Res) du compteur d'événements (Z1) et du compteur binaire (Z2).

8. Dispositif selon la revendication 7, caractérisé en ce que l'élément temporel (M) est un monostable.

9. Dispositif selon au moins l'une des revendications 1 à 8, caractérisé en ce que, pour bloquer l'impulsion de remise à l'état initial destinée au compteur d'événements (Z1), on prévoit une porte ET (U7) dont l'une des entrées est reliée à la sortie de l'élément temporel (M) et dont l'autre entrée, en tant qu'entrée de blocage, est reliée à la sortie de l'élément de mémorisation (F7), tandis que la sortie de la porte ET (U7) est reliée à l'entrée de remise à l'état initial (Res) du compteur d'événements (Z1).

10. Dispositif selon au moins l'une de revendications 1 à 9, caractérisé en ce qu'on prévoit un dispositif de diagnostic qui est constitué par un certain nombre d'éléments de mémorisation (F1 ... F6), correspondant au nombre des éléments commandables semi-conducteurs (T1 ... T6), dont les entrées de réglage (S) sont reliées aux sorties des portes ET (U1 ... U6) comparant les intervalles de blocage (E1, E2) et dont les entrées de remise à l'état initial (R) sont reliées à la sortie de la porte ET (U7) délivrant l'impulsion de remise à l'état initial, et en ce que des éléments d'affichage (H1 ... H6) sont reliés aux sorties des éléments de mémorisation (F1 ... F6).

Fig.1

Fig. 2

Fig. 3